# FASCICULE DE BREVET EUROPEEN

(11) **EP 3 927 486 B1**
(45) Date de publication et mention de la délivrance du brevet: **20.09.2023**
(21) Numéro de dépôt: 20706594.7
(22) Date de dépôt: 19.02.2020
(51) Int. Cl.: B23B 13/02, B23B 13/08

(54) **GUIDE-BARRE**
STANGENFÜHRUNG
BAR GUIDE

(30) Priorité: 19.02.2019 CH 2132019
(43) Date de publication de la demande: 29.12.2021
(73) Titulaire: Tornos SA, 2740 Moutier (CH)
(72) Inventeur: DROZ, Fabrice, 2720 Tramelan (CH); RAIS, Kevin, 2738 Court (CH); WIPF, Thomas, 2504 Bienne (CH)
(74) Mandataire: P&TS SA (AG, Ltd.)
(86) Numéro de dépôt international: PCT/IB2020/051353
(87) Numéro de publication internationale: WO 2020/170134

(56) Documents cités:
- EP-A1- 0 574 882
- EP-A1- 1 331 053
- DE-C- 717 362
- US-A- 4 000 797

## Description

### Domaine technique

La présente invention concerne un guide-barre pour guider une barre afin d'alimenter machine-outil selon le préambule de la revendication 1, par exemple dans une décolleteuse. Un tel guide-barre est connu du document US 4 000 797 A.

Un tel guide-barre peut par exemple constituer un élément d'un ravitailleur en barres.

### Etat de la technique

Les décolleteuses permettent l'usinage de barres au moyen d'outils disposés autour d'une barre en rotation.

Ces décolleteuses sont souvent associées à des ravitailleurs permettant de les alimenter en barres à usiner. Un ravitailleur comprend généralement un stock de barres à usiner ainsi qu'un guide-barres pour guider la barre à l'arrière de la décolleteuse lors de son usinage.

Même une décolleteuse dépourvue de ravitailleur nécessite un guide-barre pour tenir et guider la barre en rotation lors de son usinage.

Ces guides-barres comportent fréquemment un ou plusieurs tubes remplis d'un bain d'huile et dans lesquels la ou les barres à usiner peuvent pivoter. L'absence de surfaces de guidage contre lesquels la barre peut s'appuyer rend le guidage imprécis, notamment à haute vitesse et lors de diamètres de barres importants. En outre, ces dispositifs nécessitent des pompes à huile et un remplacement périodique de l'huile, ce qui rend leur utilisation fastidieuse.

On connaît par ailleurs des guides barres comportant un ensemble de rouleaux mobiles en rotation et entre lesquelles la barre à usiner est mise en rotation autour de son axe longitudinal lors de son usinage. De tels guides-barres présentent cependant l'inconvénient d'être coûteux, en raison des rouleaux qui sont des pièces de précision souvent munies d'un revêtement durci. Ces rouleaux doivent être remplacés régulièrement, ce qui augmente encore le coût, et immobilise la machine lors du remplacement de ces pièces mobiles qui sont difficiles et longues à remplacer. En outre ces rouleaux sont bruyants.

En outre, les rouleaux de tels guide-barres, également dénommés galets, ne sont pas toujours adaptés au guidage de barres dont le diamètre est inférieur à 20 mm, et à fortiori inférieur à 10 mm. Du fait de la masse des galets par rapport à celle de la barre en rotation, et de leur inertie relativement importante, il est difficile de les entraîner en rotation par la barre.. Une pression de contact importante est nécessaire, qui peut déformer les barres les plus flexibles. Il est en outre difficile de trouver des galets suffisamment petits pour être disposés sans se toucher autour de plus faible diamètre, typiquement inférieur à 15 mm.

Les ravitailleurs de l'art antérieur présentent en outre l'inconvénient d'être difficiles et lents à adapter à des barres de diamètre variable ; la manipulation requiert le plus souvent un remplacement de pièces de guidage.

Ces inconvénients sont particulièrement problématiques lors de l'usinage à grande vitesse, par exemple lors de l'usinage à plus de 20'000 tours minutes, notamment pour l'usinage de barres de petit diamètre. Dans ces conditions, l'usure des rouleaux, les déformations des barres, et le bruit généré sont encore exacerbés.

### Bref résumé de l'invention

Un but de la présente invention est donc de proposer un guide-barre qui soit exempt des problèmes mentionnés ci-dessus, ou en tous les cas qui atténue ces problèmes.

Selon l'invention, ces buts sont atteints au moyen d'un guide-barre pour guider une barre afin d'alimenter une machine-outil selon la revendication 1, comprenant N groupes de touches de guidage, chaque groupe comportant un nombre M égal à au moins deux, de préférence 3, touches de guidage et un mécanisme de déplacement synchronisé des M touches de guidage d'au moins un groupe de manière à ajuster la distance entre chaque touche de guidage et l'axe longitudinal de la barre. Les modes de réalisation préférentiels de la présente invention sont définis dans les revendications dépendantes.

Les touches de guidage sont destinées au guidage de la barre pendant son usinage.

Les touches de guidage peuvent se déplacer selon une direction essentiellement radiale par rapport à la barre.

Le déplacement synchronisé des M touches de guidage de chaque groupe permet de faciliter l'ajustement à des barres de diamètre variable, sans devoir ajuster individuellement chacune des touches de guidage.

Le déplacement des touches est synchronisé, c'est-à-dire que les touches peuvent être déplacées simultanément pour s'adapter à des barres de diamètres différents, sans devoir régler indépendamment leur distance à l'axe de rotation de la barre.

L'amplitude du déplacement des M touches de guidage de chaque groupe est synchronisé de manière à ce que des barres de différents diamètres puissent être guidées autour du même axe de rotation.

L'amplitude du déplacement des M touches de guidage de chaque groupe est de préférence égale.

Cet ajustement synchronisé permet aussi de régler avec précision le jeu entre la barre et chaque touche de guidage, de manière à assurer un guidage précis, sans risque de déplacement du centre de la barre, tout en minimisant les vibrations et le bruit même à haute vitesse.

Selon la présente invention, le mécanisme de déplacement des touches de quidaqe comprend une came dont la périphérie comporte M portions angulaires, chaque portion angulaire déterminant le déplacement radial d'une dite touche.

II est aussi possible de prévoir plusieurs cames coaxiales. Cela permet de réduire le risque d'amplification des erreurs si une seule came devait contrôler la position d'une touche éloignée via un levier ou une tige de grande longueur.

Le déplacement des touches de différents groupes est de préférence synchronisé.

Les différentes cames peuvent être montées sur un même arbre à cames. Cela permet de les commander simultanément, par exemple à l'aide d'un actuateur tel qu'une manivelle à main ou un moteur.

Chaque came peut déterminer la position des touches de guidage de plusieurs groupes de touches distincts.

Le guide-barre peut comprendre au moins deux touches de guidage, dans deux groupes distincts, qui sont commandées par la même portion de came. La position d'une seule came permet donc de déterminer la position de plusieurs groupes de touches.

Chaque touche de guidage peut être liée à un levier commandant son déplacement, chaque dit levier étant associé à un suiveur en appui contre une dite portion de la came, un ressort appuyant ledit suiveur contre ladite portion.

Le guide-barre peut être agencé de manière à ce que ladite barre puisse être mise en rotation en étant guidée par lesdits groupes de touches.

Le contact entre ladite barre et lesdites touches de guidage est de préférence un glissement sec.

Un film d'huile peut être prévu entre la barre et les touches de guidage.

Un revêtement tribologique, par exemple une pièce rapportée, peut recouvrir la surface desdites touches en frottement contre ladite barre.

Chaque touche de guidage peut se déplacer avec un seul degré de liberté, radialement par rapport à la barre à usiner.

La position radiale de chaque touche de guidage selon ce degré de liberté est contrôlée par une portion d'une came.

La position radiale de la surface de contact de chaque touche de guidage avec la barre peut osciller grâce à au moins un amortisseur.

La touche peut inclure un guidage flexible permettant un déplacement fin de la surface de contact de la touche avec la barre à usiner, de manière à garantir un contact même en cas de barre non rectiligne ou d'oscillations de la barre.

Ce guidage flexible peut aussi servir d'amortisseur de vibrations. Il peut permettre à l'ensemble de la touche de se déplacer en translation.

Un degré de liberté radial supplémentaire peut être prévu pour la surface de la touche, en intégrant un amortisseur dans la touche elle-même.

Un second amortisseur peut être lié à chaque touche de guidage. Alternativement, un second amortisseur peut être utilisé pour amortir les oscillations radiales de plusieurs touches de guidage.

Chaque amortisseur peut comporter un élastomère ou un fluide viscoélastique.

Les touches sont pratiquement immobiles lors de l'usinage, à l'exception éventuelle d'un mouvement essentiellement radial toléré par les amortisseurs.

Plusieurs touches de guidage de différents groupes peuvent être montées sur un support porte-touche. Le déplacement du support porte-touche assure le déplacement simultané de ces différentes touches de guidage.

Deux supports porte-touche peuvent être disposés de manière à former une gorge en V permettant le chargement de la barre à usiner. L'angle entre ces deux supports peut être de 120°.

Un troisième support porte-touche peut être disposé à 120° des deux autres supports porte-touche. Les trois supports porte-touche sont alors disposés en étoile à trois branches.

Les touches de guidage sont avantageusement montées d'un côté d'un support porte-touche, alors qu'au moins certains dits amortisseurs sont disposés de l'autre côté du support porte-touche correspondant.

Une pluralité de guide de touches peuvent être prévus.

Chaque guide de touche comporte au moins une surface de guidage contre laquelle une touche de guidage ou un support de touche peut se déplacer. Le guide de touche définit ainsi le plan de déplacement d'une ou plusieurs touches de guidage.

Les guides de touche peuvent comporter M surfaces de guidage, afin de définir les plans de guidage de M touches de guidage ou supports de touches. La position relative des M touches de guidage ou supports est ainsi définie par les guides de touche.

Les plans de guidage sont radiaux par rapport à la barre à usiner.

Chaque touche de guidage peut se déplacer selon un seul degré de liberté parallèlement à un des plans de guidage.

La position d'une touche de guidage sur le plan de guidage est déterminée par une portion de came.

Les guides de touche sont avantageusement réalisés de manière monolithique, afin de garantir la précision de positionnement relatif des M différentes surfaces de guidage. Des guides de touche réalisés par assemblage de différentes pièces peuvent aussi être considérés.

Chaque guide de touche peut comporter M amortisseurs pour amortir les déplacements radiaux de M touches de guidage ou supports de touches.

Au moins une desdites touches de guidage de chaque groupe est de préférence décalée longitudinalement par rapport aux autres touches de guidage du même groupe. Cette disposition en quinconce permet d'éviter la collision entre touches de guidage du même groupe.

### Brève description des figures

Des exemples de mise en oeuvre de l'invention sont indiqués dans la description illustrée par les figures annexées dans lesquelles :
- La figure 1 illustre une vue en perspective d'un guide-barre selon l'invention.

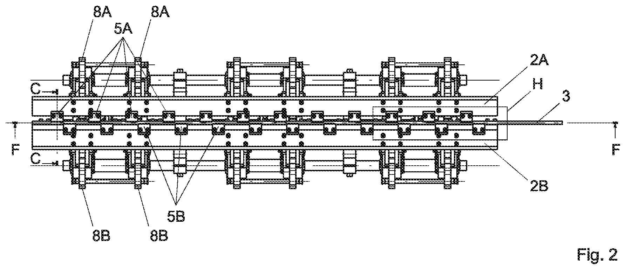

- La figure 2 illustre une vue de dessus d'un guide-barre selon l'invention.

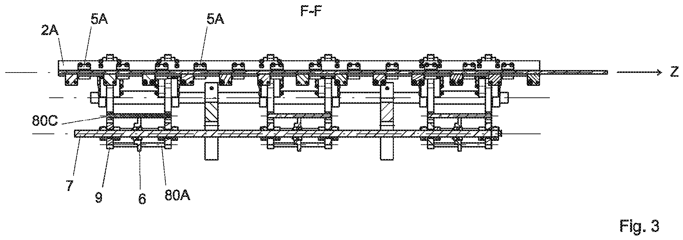

- La figure 3 illustre une coupe longitudinale selon le plan vertical F-F (Fig. 2) d'un guide-barre selon l'invention.
- La figure 4 illustre une vue du détail H de la figure 2.
- La figure 5 illustre une coupe transversale d'un guide-barre selon l'invention, selon un plan vertical traversant une came.
- La figure 6 illustre une coupe transversale d'un guide-barre selon l'invention, selon un plan vertical traversant un guide de touche et les leviers associés.
- La figure 7 illustre une coupe transversale d'un guide-barre selon l'invention, selon un plan vertical devant un guide de touche.
- La figure 8 illustre une vue en coupe C-C (fig 2) d'un détail montrant notamment les ressorts de rappel des leviers et un groupe de touches.
- La figure 9 illustre une vue en coupe du détail D de la figure 8, montrant notamment un groupe de touches.
- La figure 10 illustre une touche de guidage munie d'un premier amortisseur.
- La figure 11 illustre une vue agrandie d'un amortisseur 91.
- La figure 12 illustre une vue en perspective d'un guide-barre selon un mode de réalisation de l'invention.
- La figure 13 illustre des détails d'un guide-barre selon un mode de réalisation de l'invention.
- La figure 14 illustre une touche de guidage munie d'un premier amortisseur, selon un autre mode de réalisation de l'invention.

### Exemple(s) de mode de réalisation de l'invention

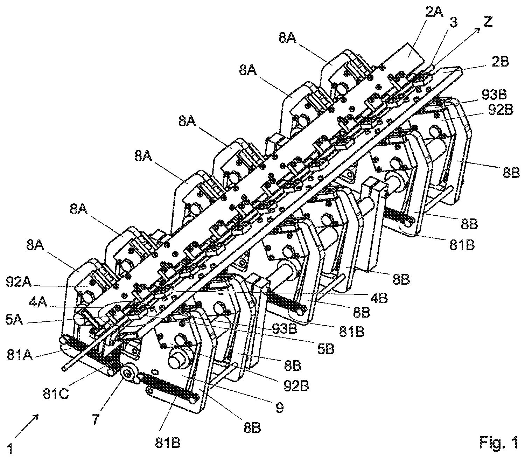

La figure 1 illustre en perspective une vue d'ensemble d'un guide-barre 1 selon l'invention. Ce guide-barre est destiné à guider une barre 3 en rotation pendant son usinage par une décolleteuse ou une autre machine d'usinage à la barre.

Le guide-barre 1 peut par exemple être intégré à un ravitailleur (non illustré) comportant un stock de barres destinées à être chargées successivement sur le guide-barre pour leur usinage successif. Le guide-barre 1 peut aussi être intégré à la machine d'usinage, par exemple à une décolleteuse. « Intégré » signifie ici que le guide-barre est solidarisé en usine à la machine, qu'il est monté sur un même bâti, et que son alignement ne doit habituellement pas être ajusté au lieu d'utilisation, mais qu'il est garanti en usine.

Le guide-barre peut être monté avec l'axe Z incliné par rapport à l'horizontale, de manière à faciliter l'avance de la barre 3 grâce à la gravité. L'angle d'inclinaison est avantageusement supérieur à 30°, par exemple égal ou supérieur à 45°. L'axe Z peut aussi être horizontal, ou vertical.

La barre 3 peut être tenue et guidée à une extrémité par la poupée de la machine (non illustrée). Sur le guide-barre 1, la barre 3 est guidée par plusieurs groupes 4 de touches de guidage (ou touches) 5. L'exemple de la figure 1 comporte douze groupes de touches réparties longitudinalement le long de la barre.

La barre 3 est avancée pendant l'usinage par exemple au moyen d'une poupée mobile ou d'un canon mobile de la machine. Avant l'usinage, c'est-à-dire lors du ravitaillement, la barre 3 peut être avancée selon l'axe Z au moyen d'un dispositif d'avancement de barre non illustré, par exemple de galets, ou par gravité.

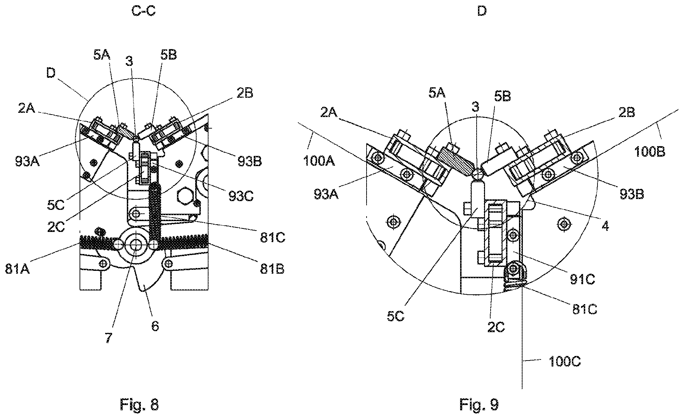

Chaque groupe 4 comporte M touches 5 dont le déplacement est associé et synchronisé. Dans l'exemple préférentiel illustré notamment sur la figure 9, chaque groupe 4 comporte trois touches 5A, 5B, 5C réparties radialement autour de la barre 3, par exemple à 120° les unes des autres. L'utilisation de trois touches 5 permet un positionnement isostatique dans chacun des plans où la barre est maintenue. Leur répartition à 120° les unes des autres permet une précision de positionnement identique dans toutes les directions du plan de positionnement.

Comme on le verra plus bas, les M touches 5A, 5B, 5C de chaque groupe 4 peuvent être déplacées radialement autour de la barre 3, les mouvements de ces M touches étant synchronisés (c'est-à-dire simultanés) et de préférence de même amplitude. Ce déplacement synchronisé est déterminé par le déplacement angulaire d'une came 6 commune.

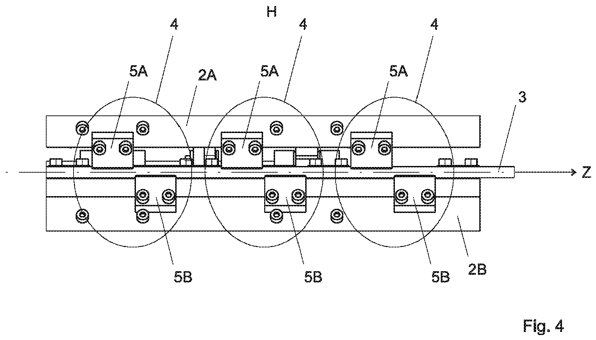

Les M touches 5 de chaque groupe 4 sont avantageusement décalées longitudinalement par rapport à l'axe de la barre, comme on le voit par exemple sur la figure 4 montrant le décalage entre les touches 5A et 5B. Cette disposition en quinconce permet d'éviter qu'une touche ne s'appuie contre une même portion longitudinale de la barre 3 qu'une autre touche. Ce décalage optionnel permet aussi d'éviter le risque de collisions entre les arêtes de deux touches adjacentes d'un même groupe lorsque les touches sont rapprochées, par exemple pour l'usinage de barres de petit diamètre.

Le guide-barre 1 illustré notamment sur la figure 1 comporte 12 groupes 5 de touches 4 réparties de manière équidistante le long de la barre 1. Ce nombre est adapté à des barres relativement courtes, par exemple des barres de moins de 1500mm, ici une barre de 1000mm. Le nombre de groupes peut cependant varier selon la longueur maximale de barres que le guide-barre 1 doit guider.

Chaque touche 5A, 5B, 5C peut se déplacer selon un seul degré de liberté radial. Ce degré de liberté radial est parallèle à un plan de guidage 100A, 100B ou 100C déterminé par une surface d'un guide de touche 9. La fonction des guides de touche 9 est de guider le déplacement radial des touches, tout en supportant ou intégrant un amortisseur de touche.

La figure 1 illustre six guides de touche 9 répartis en trois sets comprenant deux guides de touche 9 par set. Chaque guide de touche 9 est disposé dans un plan perpendiculaire à l'axe longitudinal Z de la barre 3.

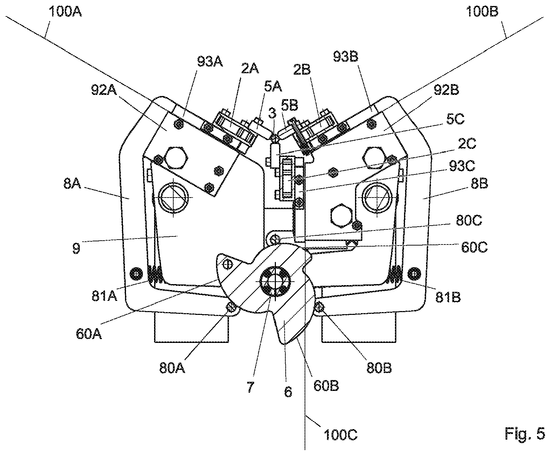

Un exemple de guide de touche 9 est illustré sur les figures 5 à 7. Dans ce mode de réalisation, le guide de touche définit trois surfaces de guidage 100A, 100B et 100C parallèlement auxquelles les touches de chaque groupe peuvent coulisser. Le guide de touche est de préférence réalisé de manière monolithique de manière à garantir un positionnement relatif précis et immuable des trois plans de guidage.

Comme on le voit notamment sur la figure 5, le guide-barre 1 comporte une came 6 montée sur un arbre à cames 7. La périphérie de la came 6 comporte M portions (ici trois). Un suiveur 80A à 80C est en appui contre chacune de ces portions, grâce à la force d'appui d'un ressort 81A à 81C respectivement. Chaque suiveur 80A à 81C est lié à un levier 8A à 8C en rotation autour d'un axe 82A à 82C respectivement. La position angulaire du levier 8 est ainsi déterminée par l'appui du suiveur 80 contre la portion 60 correspondante de la périphérie de la came 6, et donc par la forme et la position angulaire de cette came.

Plusieurs cames 6 peuvent être montées sur le même arbre à came 7, qui peut être pivoté de manière manuelle ou motorisée pour contrôler la position angulaire de plusieurs leviers 8.

Un support de touches 2 (support) est lié à tous les leviers 8 de position équivalente sur les différents guides de touches. Le guide-barre illustré comporte ainsi M = 3 supports 2. Comme on le voit particulièrement sur la figure 1, les supports 2 sont formés de profilés et s'étendent sensiblement sur toute la longueur de la barre à usiner. Les deux supports 2A, 2B supérieurs forment une gorge en V avec un angle de 120° entre les deux supports, permettant un chargement aisé de la barre par le dessus.

Les différentes touches 5 sont montées sur ces supports de touche 2. La rotation simultanée des leviers 8, contrôlée par la came 6, provoque le déplacement radial synchronisé des M supports de touche 2.

Les touches 5 sont montées sur les supports de touche. Ainsi, la position radiale de chaque touche 5 parallèlement à un plan de guidage 100 est déterminée par la position des leviers 8 et donc par la position angulaire d'une ou plusieurs cames 6.

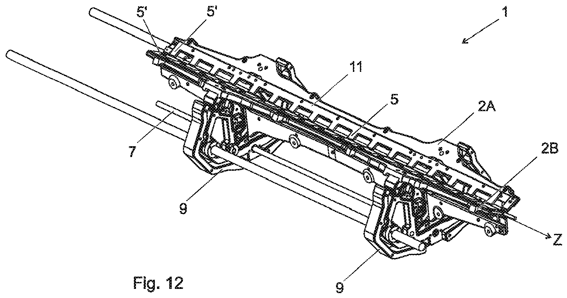

Selon une variante schématisée par la figure 12, les touches 5 disposées sur un support de touches 2 donné sont solidarisées les unes aux autres au moyen d'une traverse 11, ou sont partie intégrante d'une telle traverse 11. Une traverse 11 est fixée de manière amovible sur un support de touches 2 de sorte à positionner les touches 5 de manière adéquate pour guider la barre 3. Chaque support de touches 2 peut ainsi être équipé d'une traverse 11, dont les touches 5 sont réparties selon l'axe longitudinal Z. La traverse 11 est suffisamment rigide et rectiligne pour assurer l'alignement des touches 5 ainsi qu'une distance constante entre les touches et la barre. La traverse 11 et les touches 5 correspondantes peuvent être par exemple constituées d'une pièce unique, en fonte d'aluminium ou en un alliage d'aluminium, découpée au jet d'eau ou au laser. Le positionnement des touches 5 disposées sur un support 2 est ainsi facilité et plus rapide que dans la configuration où les touches 5 doivent être positionnées et réglées individuellement. Les touches 5 ainsi associées forment un groupe M de touches. Alternativement, plusieurs traverses 11 peuvent être disposées sur un support de touches 2 et alignées parallèlement à l'axe longitudinal Z.

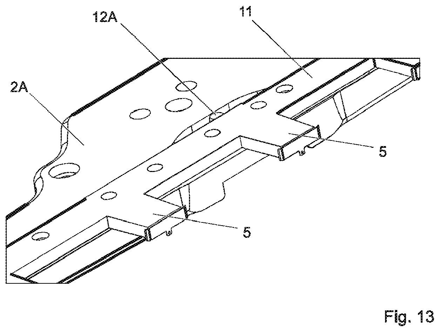

Les traverses 11 peuvent être fixées sur les supports de touches 2 par tout moyen de fixation adéquat. Elles peuvent par exemple comprendre une série de trous permettant de les visser sur le support de touche 2. Les trous peuvent être oblongs pour permettre l'ajustement de la position radiale de la traverse 11 par rapport au diamètre de la barre 3. Un ou plusieurs éléments de réglage 12 peuvent être prévus pour positionner la traverse 11 sur le support de touches 2 avec précision. Un tel élément de réglage peut prendre la forme d'une butée 12a solidaire du support de touches 2 permettant de caller la traverse 11 (figure 13). Une telle butée peut par exemple avoir une circonférence elliptique de sorte à pouvoir modifier la position de la traverse 11 avec laquelle elle est en contact. De préférence, la ou les butées 12a sont fixes et non réglables, préconçues comme surfaces de posage prédéfinies sur lesquelles les traverses 11 viennent en appui.

Selon un mode de réalisation avantageux, le nombre de guides de touches 9 peut être réduit à deux guides de touches 9. Les éléments de réglages 12 des traverses 11 sont de préférence disposés en regard des guides touches 9. Les trois traverses 11 peuvent être disposées de sorte que les touches 5 de chacune des traverses 11 soient décalées selon l'axe longitudinal Z par rapport aux touches 5 des deux autres traverses 11. De la sorte les touches sont en quinconce les unes par rapport aux autres, évitant d'éventuelles collisions. Alternativement, deux traverses 11 peuvent être disposées de sorte à placer les touches 5 en vis-à-vis. Les touches 5 d'une traverse 11 données peuvent être équidistantes ou bien disposées avec des intervalles non réguliers. Selon une disposition préférée, les traverses 11 et les touches 5 correspondantes sont disposées de sortes que les touches 5' d'une ou des deux extrémités soient en en vis-à-vis et que les autres touches 5 soient en quinconce.

Chaque guide de touche 9 peut porter ou inclure M seconds amortisseurs 91. Bien que désignés par l'expression « amortisseur», la fonction principale des éléments 91 est de guider les portes-touches en leur permettant de coulisser le long d'une des surfaces de guidage 100 définies par le guide 9. En option, ou accessoirement, les seconds amortisseurs permettent aussi d'amortir les vibrations radiales de chaque porte-touche 2. La position radiale de chaque portes-touche 2, et donc des touches montées sur ce porte-touche, est donc déterminée par les cames 8, mais peut osciller de manière amortie autour du diamètre de réglage, grâce à un amortisseur 91, ou à différents amortisseurs le long de la barre.

Dans un mode de réalisation préférentiel, les amortisseurs 91 sont arrangés pour amortir les vibrations des touches dans la direction radiale par rapport à la barre 3. D'autres modes d'amortissement, notamment pour amortir les vibrations selon des directions parallèles à l'axe Z, peuvent être prévus.

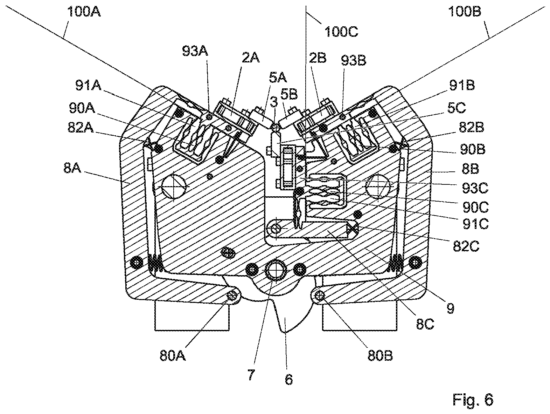

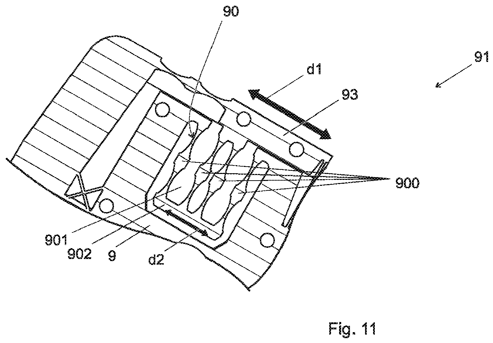

Comme on le voit en particulier sur les figures 6 et 11, chaque amortisseur 91 comporte une structure flexible 90 liée au guide de touche 9 et à un porte support 93. Cette structure flexible peut comporter plusieurs lames déformables 900, de manière à permettre un guidage précis de la barre, même en présence de barres de diamètres différent du diamètre nominal pour lequel le guide-barre est réglé, ou de barres non parfaitement rectilignes ou présentant un diamètre irrégulier.

Les lames déformables 900 peuvent être immergées dans un élastomère ou un fluide viscoélastique 901 optionnel, afin de modifier l'amplitude des oscillations et le spectre d'atténuation. Cet élastomère ou ce fluide permet de dissiper au moins une partie de l'énergie d'oscillation radiale de la barre 3. Il peut être omis notamment dans le cas préférentiel où les touches 5 intègrent leur propre amortisseur, comme on le verra.

La structure flexible 90 est de préférence réalisée en une seule pièce, par exemple par découpe au jet d'eau, par injection ou par impression 3D.

Une fonction de la structure flexible 90 est de créer un degré de liberté en translation du porte-touche 93 selon l'axe d1 afin de permettre une adaptation à tous les diamètres de barre, ou à des barres de diamètre irrégulier. Pour avoir une course suffisante, le dispositif comporte une "table double" ou "table compensée" et comprend ainsi un mobile secondaire 902 relié par deux des lames déformables flexibles 900 au porte-support 93, et par deux autres des flexibles au guide de touches 9. Les lames déformables 900 peuvent avoir toutes la même longueur, le même profil et la même rigidité.

Le mobile secondaire 902 présente également un degré de liberté en translation selon d2 qui fera avantageusement 0.5 fois la course du déplacement du porte-support 93 (mobile principal). Ce degré de liberté du mobile secondaire constitue un degré de liberté interne au mécanisme.

Le mobile secondaire 902 peut osciller indépendamment du porte-support 93 auquel il est relié par des lames flexibles. La fonction d'amortissement de l'amortisseur 91 est avantageusement donnée principalement par le degré de liberté du mobile secondaire selon d2, qui peut osciller et dissiper de l'énergie indépendamment du porte-support 93.

Le porte-touche 93 peut de préférence être déplacé uniquement en translation selon d1 par rapport au guide de touche 9 ; il est possible de démontrer que ce déplacement en translation pure peut être obtenu en dimensionnant la structure flexible 90 en sorte que le mobile secondaire 902 se déplace exactement deux fois moins que le porte-touche 93.

Le levier 8 exerce une précontrainte sur le porte support 93, de manière à le déplacer radialement dans une position de repos stable. La structure flexible 90 permet ainsi d'assurer un guidage précis de la barre, en compensant les variations de diamètre, et accessoirement d'amortir ses vibrations. Chaque support 2 est monté sur un ensemble de porte-supports 93 de position équivalente. L'oscillation est avant tout radiale par rapport à la barre, bien que d'autres modes d'oscillation de moindre amplitude puissent être prévus.

Le guidage en translation des touches peut aussi être réalisé autrement qu'avec des guidages flexibles. Il peut aussi être réalisé sans fonction d'amortissement.

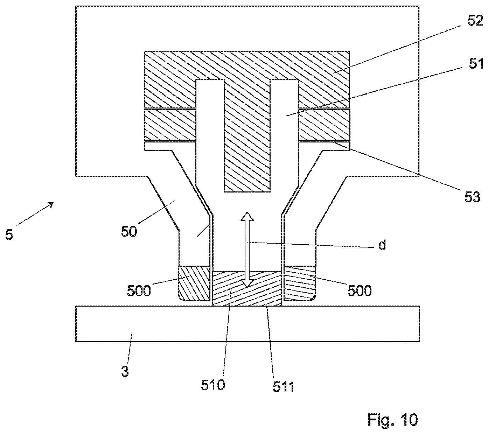

Comme on le voit sur la figure 10, les touches de guidage 5 peuvent elles-mêmes fonctionner en premier amortisseur afin de permettre à la surface 511 destinée à être mise en contact avec la barre 3 de se déplacer dans une direction d sensiblement radiale de manière à rester en contact, tout en amortissant les vibrations. L'amortisseur garantit ainsi un contact quasi permanent de la touche avec la barre et réduit ainsi le bruit. Il permet en outre de compenser des défauts de rectitude de la barre que le deuxième amortisseur ne peut que difficilement compenser.

A cet effet, dans l'exemple non limitatif illustré à la figure 10, chaque touche 5 comporte un cadre de touche 50 à l'intérieur duquel une portion de touche formant piston 51 peut coulisser radialement par rapport à la barre 3. Un matériau amortisseur 52 entre le cadre de touche 50 et la portion de touche permet d'absorber une part de l'énergie vibratoire de la barre. L'élément 53 est un guidage flexible optionnel servant à guider le déplacement de la portion de touche 51 afin d'assurer un déplacement purement radial. Le cadre de touche et la portion de touche peuvent former une seule pièce monolithique, les deux parties de cette pièce étant liées entre elles par les éléments de guidage flexibles 53. Il est aussi possible de réaliser les deux parties sous forme de deux pièces distinctes.

Les premiers amortisseurs 52 permettent avantageusement à chaque touche de guidage 5 d'exercer un léger contact contre la barre 3, et de suivre les vibrations de la surface de la barre 3 tout en les amortissant.

Le matériau choisi pour le cadre de touche 50, et de préférence pour la portion de touche 51 a de préférence un module de Young (indiquant la rigidité) élevé et un coefficient d'amortissement élevé, par rapport aux valeurs correspondantes des autres composant en acier du guide-barre. Les matériaux choisis peuvent être par exemple des polymères de type nylon, PMMA, HDPE, PTFE, polypropylène, DPE, etc, des matériaux cellulaires, des composites, des alliages tels que des alliages d'aluminium avec silicium et magnésium.

Les supports de touche 2 présentent de préférence également un excellent amortissement des vibrations tout en étant rigides pour garantir la précision de positionnement des touches. On pourra choisir un matériau du même type pour les supports de touche que pour les touches 5 elles-mêmes.

II est aussi possible, dans une variante, d'intégrer les cadres de touche 50 à chaque support de touche 2 en une pièce monolithique.

Le matériau choisi pour l'amortisseur 52 est de préférence un matériau avec un coefficient d'amortissement encore plus élevé que celui du cadre 50 et de la portion de touche 51. Son module de Young est en revanche faible par rapport aux valeurs correspondantes du cadre 50 et de la portion de touche. Le choix de ces paramètres permet d'absorber une énergie importante sans pour autant augmenter excessivement la force radiale sur la barre lors du déplacement radial suivant les oscillations de la portion correspondante de la barre. Le matériau amortisseur peut être par exemple un matériau visqueux, par exemple un fluide visqueux, un élastomère, un silicone, un matériau élastique, par exemple de type Sylodamp (marque déposée), etc. Il est aussi possible d'employer différents types de matériaux amortisseurs dans différentes touches.

La quantité d'énergie absorbée par les premiers amortisseurs 52 peut être inférieure à l'énergie absorbée par les seconds amortisseurs 91. Dans un mode de réalisation préférentiel, la quantité d'énergie absorbée par les premiers amortisseurs 52 est cependant supérieure à l'énergie absorbée par les seconds amortisseurs 91, afin d'absorber les vibrations au plus près de la barre et en réduisant l'énergie vibratoire transmise aux supports de touche. Cet amortissement individuel de chaque touche, près de la barre 3, permet aussi de garantir un contact permanent de chaque touche avec la barre, même en cas de barre non rectiligne.

La surface des touches 5 tournée vers la barre 3 est de préférence revêtue d'un revêtement tribologique afin de réduire le frottement. Un film d'huile peut être prévu en option entre la barre et les touches.

Sur la figure 10, la portion de touche 51 est ainsi munie d'une pièce 510 rapportée, par exemple collée ou soudée, tournée vers la barre 3 et servant d'interface avec cette dernière. La pièce 510 peut être par exemple un acier avec traitement de surface, un acier avec traitement thermique, une céramique, un métal dur, un métal revêtu d'un revêtement DLC (Diamond-Like-Carbon) ou téflon, etc

Le cadre de touche 50 est généralement en retrait par rapport à la portion de touche 51 ; il peut cependant aussi être amené à entrer en contact avec la barre 3. Sa face tournée vers cette barre est ainsi de préférence également pourvue d'une pièce rapportée 500, qui peut être dans le même matériau ou dans le même type de matériaux que la pièce rapportée 510. La pièce rapportée peut être en une partie, ou en deux parties à l'avant et à l'arrière de la touche.

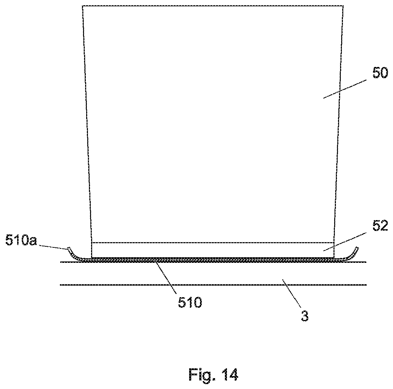

Selon une variante schématisée à la figure 14, la touche 5 comporte un cadre de touche 50, une pièce rapportée 510 tournée vers la barre 3 et servant d'interface avec cette dernière, et un premier amortisseur 52 intercalé entre le cadre de touche 50 et la pièce rapportée 510. Le premier amortisseur 52, le cadre de touche 50 et la pièce rapportée 510 ayant les mêmes propriétés que celle décrites ci-dessus en relation avec le mode de réalisation de la figure 10. La pièce rapportée 510 peut être plus large que le cadre de touche 50, ce qui permet d'augmenter la surface de contact avec la barre 3 et de limiter les éventuels effets d'impact de la touche 5 sur la surface de la barre 3. De plus la pièce rapportée 510 comporte une ou deux courbures 510a à ses extrémités, de sorte à faciliter le mouvement transversal de la barre 3 durant son usinage. Les courbures peuvent être remplacées par des chanfreins.

Indépendamment de leur configuration, les touches de guidage 5 peuvent être disposées de manière individuelle sur les supports de touche 2, ou bien être combinées les unes aux autres au moyen d'une traverse 11. De préférence, les touches de guidage 5 comportent un cadre de touche 50, une pièce rapportée 510 et un premier amortisseur 52 intercalé entre le cadre de touche 50 et la pièce rapportée 510, et sont constituées de sorte que le cadre de touche 50 soit partie intégrante de la traverse 11.

Dans tous les modes de réalisation, les touches 5 sont néanmoins des pièces d'usure et peuvent de préférence être démontées, en totalité ou en partie, à l'aide par exemple de vis pour être remplacées. Dans le cas où les touches forment un ensemble solidaire ou indissociable avec une traverse 11, la traverse 11 elle-même peut facilement être démontée et remplacée.

L'usure des touches 5 peut être mesurée en tournant la came 6 pour appuyer les touches contre la barre 3, puis en mesurant le courant électrique à travers le moteur commandant ce mouvement de la came. Ce courant dépend du couple moteur nécessaire pour atteindre la position donnée, et donc de la force d'appui des touches contre la barre, qui diminue lorsque les touches sont usées.

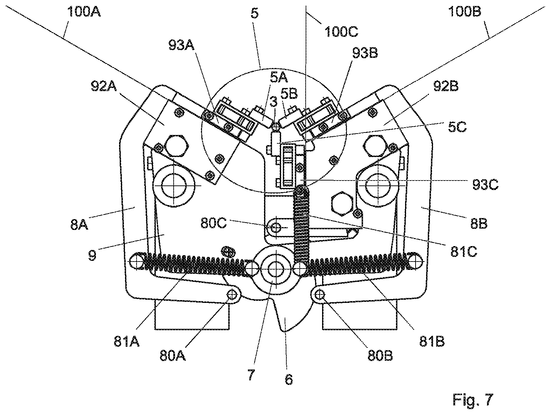

Un cache 92 (figure 5) permet de recouvrir chaque amortisseur et d'empêcher que l'élastomère ou le fluide viscoélastique ne s'échappe. Sur la figure 7, un seul cache 92B recouvre les deux amortisseurs 91A et 91C.

Les amortisseurs 91 sont de préférence disposés du côté des supports 2 opposés à la barre 3, c'est-à-dire sous ces supports. Cet arrangement favorise l'évacuation de chaleur dissipée par les amortisseurs.

Les différents amortisseurs 91 destinés à amortir les vibrations des touches d'un groupe 5 peuvent avoir des spectres de réponse différents. Par exemple, l'amortisseur lié à la touche 5C sous la barre peut avoir une rigidité plus élevée que les deux autres amortisseurs supérieurs qui ne supportent pas le poids de la barre 3. Il est aussi possible de disposer les touches différemment autour de la barre 3, pour répartir le poids de la barre sur plusieurs touches.

Les touches 5 sont à la fois destinées au guidage de la barre 3 et à l'amortissement des vibrations radiales de la barre.

Il est aussi possible de prévoir différents types de touches 5 dans un même guide-barre, par exemple des touches dépourvues d'amortisseurs et des touches munies d'un tel amortisseur; ou des touches munies d'amortisseurs avec des caractéristiques différentes.

Le guide barre est notamment adapté à l'usinage de barres de petit diamètre, par exemple de barres entre 1 et 7 mm de diamètre, voire des barres de diamètre plus important jusqu'à 32 millimètre.

Le guide barre est notamment adapté à l'usinage de barres de petite longueur, par exemple de barres entre 500 et 1500 mm de long.

Le guide barre est notamment adapté à l'usinage de barres à grande vitesse, par exemple à 20'000 tours minute, voire à 40'000 ou même 70'000 tours-minute.

Le guide-barre est avantageusement dépourvu de corps roulants en contact avec la barre 3.

### Numéros de référence employés sur les figures

- 1: Guide-barre
- 11: Traverse
- 12, 12A: Eléments de réglage
- 2: Support de touche (support)
- 3: Barre
- 4: Groupe de touches
- 5, 5': Touche de guidage (touche)
- 50: Cadre de touche
- 51: Portion de touche
- 52: Premier amortisseur
- 53: Guidage flexible
- 500: Pièce rapportée
- 510: Pièce rapportée
- 510a: Courbure de la pièce rapportée
- 6: Came
- 60: Portion de la périphérie de la came
- 7: Arbre à cames
- 8: Levier
- 80: Suiveur
- 81: Ressort
- 82: Axe de rotation du levier
- 9: Guide de touche
- 90: Structure flexible
- 900: Lame déformable
- 901: Liquide viscoélastique
- 902: Mobile secondaire
- 91: Amortisseur
- 92: Cache-amortisseur
- 93: Porte-support
- 100: Plan de guidage
- Z: Axe longitudinal
- D: Direction radiale
- d1: Premier degré de liberté en translation
- d2: Deuxième degré de liberté en translation (degré de liberté interne)

## Revendications

1. Guide-barre (1) pour guider une barre (3) afin d'alimenter une machine-outil, comprenant N groupes (4) de touches de guidage (5), chaque groupe (4) comportant un nombre M égal à au moins deux de touches de guidage (5) et un mécanisme (6,7,8) de déplacement synchronisé des M touches d'au moins un groupe, de manière à ajuster la distance entre chaque touche de guidage (5) du groupe et l'axe longitudinal (Z) de la barre (3), tel que chaque touche de guidage (5) incorpore un premier amortisseur (52) permettant d'amortir les vibrations de la barre (3) et **caractérisé en ce que** ledit mécanisme comporte une came (6) dont la périphérie comporte M portion (60) angulaires, la position radiale de chaque touche de guidage (5) d'un groupe étant déterminée par une autre dite portion angulaire.

2. Guide-barre selon la revendication 1, comportant plusieurs dits groupes (4) décalés le long de la barre (3).

3. Guide-barre selon l'une des revendications 1 et 2, la position radiale d'au moins deux touches de guidage (5) de deux groupes (4) distincts étant déterminée par la même portion (60) de la même came (6).

4. Guide-barre selon l'une des revendications 1 à 3, comportant plusieurs dites cames (6).

5. Guide-barre selon l'une des revendications 1 à 4, comportant plusieurs leviers (8), chaque levier déterminant la position radiale d'une ou plusieurs touches de guidage (5), chaque dit levier (8) étant associé à un suiveur (80) en appui contre une dite portion (60) de la came, un ressort (81) appuyant ledit suiveur contre ladite portion (60).

6. Guide-barre selon l'une des revendications 1 à 5, le nombre N de groupes (4) étant supérieur à 1,
les M touches de guidage correspondantes des différents groupes étant montées sur un support de touche (2) commun,
ledit mécanisme (6,7,8) de déplacement synchronisé permettant de déplacer de manière synchronisée les M supports de touche (2).

7. Guide-barre selon l'une des revendications 5 ou 6, comportant un guide de touche (9) muni d'une ou plusieurs surfaces de guidage radiales (100) pour lesdites touches de guidage.

8. Guide-barre selon la revendication 1, chaque touche de guidage intégrant :
un cadre de touche (50) ;
une portion de touche (51) mobile par rapport au cadre de touche (50) ;
ledit amortisseur (52) entre le cadre de touche et la portion de touche (51).

9. Guide-barre selon la revendication 8, comportant un guidage flexible (53) pour guider le déplacement de ladite portion de touche (51).

10. Guide-barre selon l'une des revendications 1 à 9, chaque touche de guidage (5) étant montée sur une structure flexible (90) permettant un déplacement radial de cette touche (5).

11. Guide-barre selon l'une des revendications 1 à 5, le nombre N de groupes (4) étant supérieur à 1,
les M touches de guidage correspondantes des différents groupes étant montées sur un support de touche (2) commun,
ledit mécanisme (6,7,8) de déplacement synchronisé permettant de régler de manière synchronisée la position radiale des M supports de touche (2),
chaque support de touche étant monté sur une pluralité de structures flexibles (90) permettant un déplacement radial de ce support de touche.

12. Guide-barre selon l'une des revendications 10 ou 11, ladite structure flexible (90) servant d'amortisseur (91), dit second amortisseur, pour compenser les vibrations de la barre.

13. Guide-barre selon les revendications 11 ou 12, lesdites touches (5) étant montées d'un côté du support de touche, lesdites structures flexibles étant disposées de l'autre côté dudit support de touche.

14. Guide-barre selon l'une des revendications 1 à 13, au moins une desdites touches (5) de chaque groupe (4) étant décalée longitudinalement par rapport aux autres touches du même groupe, de manière à éviter la collision entre touches du même groupe.

15. Guide-barre selon la revendication 6, où lesdites M touches de guidage (5) sont combinées ou intégrées à une traverse (11), de sorte à former un ensemble de touches de guidage (5), la traverse (11) étant fixée de manière amovible sur un support de touches (2).

16. Guide barre selon l'une des revendications 1 à 7, 11, 12 13, 14 et 15, où chaque touche de guidage (5) comporte un cadre de touche (50), une pièce rapportée (510), et où ledit premier amortisseur (52) est intercalé entre le cadre de touche (50) et la pièce rapportée (510).

17. Guide-barre selon la revendication 16, ladite pièce rapportée (510) comportant à l'une ou deux de ses extrémités une courbure ou un chanfrein (510a).

## Patentansprüche

1. Stangenführung (1) zum Führen einer Stange (3), zur Versorgung einer Werkzeugmaschine, mit N Gruppen (4) von Führungstasten (5), wobei jede Gruppe (4) eine Anzahl M gleich mindestens zwei Führungstasten (5) und einen Mechanismus (6, 7, 8) zur synchronisierten Verschiebung der M Tasten von mindestens einer Gruppe aufweist, um den Abstand zwischen jeder Führungstaste (5) der Gruppe und der Längsachse (Z) der Stange (3) einzustellen, wobei jede Führungstaste (5) einen ersten Dämpfer (52) aufweist, der ausgebildet ist, die Vibrationen der Stange (3) zu dämpfen, **dadurch gekennzeichnet, dass** der Mechanismus eine Nocke (6) umfasst, deren Umfang M Winkelabschnitte (60) aufweist, wobei die radiale Position jeder Führungstaste (5) einer Gruppe durch einen anderen Winkelabschnitt bestimmt wird.

2. Stangenführung nach Anspruch 1 mit mehreren besagten Gruppen (4), die entlang der Stange (3) versetzt sind.

3. Stangenführung nach einem der Ansprüche 1 und 2, wobei die radiale Position von mindestens zwei Führungstasten (5) aus zwei verschiedenen Gruppen (4) durch denselben Abschnitt (60) desselben Nockens (6) bestimmt wird.

4. Stangenführung nach einem der Ansprüche 1 bis 3, mit mehreren besagten Nocken (6).

5. Stangenführung nach einem der Ansprüche 1 bis 4, mit mehreren Hebeln (8), wobei jeder Hebel die radiale Position einer oder mehrerer Führungstasten (5) bestimmt, wobei jeder besagte Hebel (8) mit einem Mitnehmer (80) verbunden ist, der gegen einen besagten Abschnitt (60) der Nocke anliegt, wobei eine Feder (81) den Mitnehmer gegen den besagten Abschnitt (60) drückt.

6. Stangenführung nach einem der Ansprüche 1 bis 5, wobei die Anzahl N der Gruppen (4) größer als 1 ist,
die entsprechenden M Führungstasten der verschiedenen Gruppen auf einem gemeinsamen Tastenhalter (2) angebracht sind, wobei
der Mechanismus (6, 7, 8) für die synchrone Bewegung eine synchrone Bewegung der M Tastenhalter (2) ermöglicht.

7. Stangenführung nach einem der Ansprüche 5 oder 6, mit einer Tastenführung (9), die mit einer oder mehreren radialen Führungsflächen (100) für die genannten Führungstasten ausgebildet ist.

8. Stangenführung nach Anspruch 1, wobei jede Führungstaste integriert:
einen Tastenrahmen (50);
einen Tastenabschnitt (51), der in Bezug auf den Tastenrahmen (50) beweglich ist;
den genannten Dämpfer (52) zwischen dem Tastenrahmen und dem Tastenabschnitt (51).

9. Stangenführung nach Anspruch 8, mit einer flexiblen Führung (53) zum Führen der Bewegung des Tastenabschnitts (51).

10. Stangenführung nach einem der Ansprüche 1 bis 9, wobei jede Führungstaste (5) an einer flexiblen Struktur (90) angebracht ist, die eine radiale Verschiebung dieser Führungstaste (5) ermöglicht.

11. Stangenführung nach einem der Ansprüche 1 bis 5, wobei die Anzahl N der Gruppen (4) größer als 1 ist,
die entsprechenden M Führungstasten der verschiedenen Gruppen auf einem gemeinsamen Tastenhalter (2) angebracht sind, wobei
der Mechanismus (6, 7, 8) für die synchronisierte Verschiebung eine synchronisierte Einstellung der radialen Position der M Tastenhalter (2) ermöglicht,
wobei jeder Tastenhalter an einer Vielzahl flexibler Strukturen (90) angebracht ist, die eine radiale Verschiebung dieses Tastenhalters ermöglichen.

12. Stangenführung nach einem der Ansprüche 10 oder 11, wobei die flexible Struktur (90) als Dämpfer (91), sprich zweiter Dämpfer, dient, um die Vibrationen der Stange zu kompensieren.

13. Stangenführung nach Anspruch 11 oder 12, wobei die Führungstaste (5) auf einer Seite des Tastenhalters angebracht sind und die flexiblen Strukturen auf der anderen Seite des Tastenhalters angeordnet sind.

14. Stangenführung nach einem der Ansprüche 1 bis 13, wobei mindestens eine der Führungstaste (5) jeder Gruppe (4) in Bezug auf die anderen Führungstasten derselben Gruppe in Längsrichtung versetzt ist, um eine Kollision zwischen den Führungstasten derselben Gruppe zu vermeiden.

15. Stangenführung nach Anspruch 6, wobei die M Führungstasten (5) mit einer Querstange (11) versehen oder integriert sind, um eine Führungstastenanordnung (5) zu bilden, wobei die Querstange (11) lösbar an einem Tastenhalter (2) befestigt ist.

16. Stangenführung nach einem der Ansprüche 1 bis 7, 11, 12 13, 14 und 15, wobei jede Führungstaste (5) einen Tastenrahmen (50), einen Einsatz (510) aufweist, und wobei der erste Dämpfer (52) zwischen dem Tastenrahmen (50) und dem Einsatz (510) angeordnet ist.

17. Stangenführung nach Anspruch 16, wobei der Einsatz (510) an einem oder beiden seiner Enden eine Krümmung oder eine Fase (510a) aufweist.

## Claims

1. A Bar guide (1) for guiding a bar (3) to feed a machine tool, comprising N groups (4) to guide buttons (5), each group (4) comprising a number M equal to at least two of the guide buttons (5) and a mechanism (6, 7, 8) for synchronously moving the M buttons of at least one group, to adjust the distance between each guide button (5) of the group and the longitudinal axis (Z) of the bar (3), such that each guide key (5) incorporates a first damper (52) for damping vibrations of the bar (3), **characterized in that** said mechanism comprises a cam (6) having M angular portions (60) along its periphery, the radial position of each guide button (5) of a group being determined by a different said angular portion.

2. Bar guide according to claim 1, comprising a plurality of said groups (4) offset along the bar (3).

3. Bar guide according to one of claims 1 and 2, the radial position of at least two guide buttons (5) of two distinct groups (4) being determined by the same angular portion (60) of the same cam (6).

4. Bar guide according to one of claims 1 to 3, comprising several said cams (6).

5. Bar guide according to one of claims 1 to 4, comprising a plurality of levers (8), each lever determining the radial position of one or more guide buttons (5), each said lever (8) being associated with a follower (80) bearing against a said portion (60) of the cam, a spring (81) bearing said follower against said portion (60).

6. Bar guide according to one of claims 1 to 5, the number N of groups (4) being greater than 1,
the M corresponding guide buttons of the different groups being mounted on a common button support (2),
said synchronised displacement mechanism (6, 7, 8) enabling the M button supports (2) to be displaced synchronously.

7. Bar guide according to one of claims 5 or 6, comprising a button guide (9) provided with one or more radial guide surfaces (100) for said guide buttons.

8. Bar guide according to claim 1, each guide button comprising:
a button frame (50);
a button portion (51) which is movable relative to the button frame (50);
said damper (52) between the button frame and the button portion (51).

9. Bar guide according to claim 8, comprising a flexible guide (53) for guiding the displacement of said button portion (51).

10. Bar guide according to one of claims 1 to 9, each guide button (5) being mounted on a flexible structure (90) allowing radial displacement of said button (5).

11. Bar guide according to one of claims 1 to 5, wherein the number N of groups (4) being greater than 1,
the M corresponding guide buttons of the different groups being mounted on a common button support (2),
said synchronised displacement mechanism (6, 7, 8) allowing the radial position of the M button supports (2) to be adjusted in a synchronised manner,
each button support being mounted on a plurality of flexible structures (90) allowing radial displacement of this button support.

12. Bar guide according to one of claims 10 or 11, said flexible structure (90) acting as a damper (91), as a second damper, to compensate for vibrations of the bar.

13. Bar guide according to claims 11 or 12, said buttons (5) being mounted on one side of the button support, said flexible structures being arranged on the other side of said button support.

14. Bar guide according to one of claims 1 to 13, at least one of the said buttons (5) of each group (4) being offset longitudinally with respect to the other buttons of the same group, so as to avoid collision between buttons of the same group.

15. Bar guide according to claim 6, wherein said M guide buttons (5) are combined or integrated with a crossbar (11), so as to form a set of guide buttons (5), the crossbar (11) being removably attached to a button support (2).

16. Bar guide according to one of claims 1 to 7, 11, 12, 13, 14 and 15, wherein each guide button (5) comprises a button frame (50), an insert (510), and wherein said first damper (52) is interposed between the button frame (50) and the insert (510).

17. Bar guide according to claim 16, said insert (510) having a curvature or chamfer (510a) at one or both of its ends.
